(19) Europäisches Patentamt
European Patent Office
Office européen des brevets

(11) **EP 1 509 993 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(21) Anmeldenummer: **03727145.9**

(22) Anmeldetag: **21.03.2003**

(51) Int Cl.:
*H02P 6/16* (2006.01)     *G01R 19/04* (2006.01)

(86) Internationale Anmeldenummer:
**PCT/DE2003/000951**

(87) Internationale Veröffentlichungsnummer:
**WO 2003/103129 (11.12.2003 Gazette 2003/50)**

(54) **VERFAHREN ZUR ERFASSUNG VON KOMMUTIERUNGSIMPULSEN EINES LÜFTERMOTORS UND SCHALTUNGSANORDNUNG ZUR DURCHFÜHRUNG DES VERFAHRENS**

METHOD FOR DETECTING COMMUTATION IMPULSES OF A FAN MOTOR AND CIRCUIT ARRANGEMENT FOR CARRYING OUT SAID METHOD

PROCEDE DE DETECTION D'IMPULSIONS DE COMMUTATION D'UN MOTEUR DE VENTILATEUR ET CONFIGURATION DE CIRCUIT PERMETTANT DE METTRE EN OEUVRE LEDIT PROCEDE

(84) Benannte Vertragsstaaten:
**FR GB IE NL**

(30) Priorität: **31.05.2002 DE 10224270**

(43) Veröffentlichungstag der Anmeldung:
**02.03.2005 Patentblatt 2005/09**

(73) Patentinhaber: **Fujitsu Siemens Computers GmbH 80807 München (DE)**

(72) Erfinder: **BUSCH, Peter 86179 Augsburg (DE)**

(74) Vertreter: **Epping - Hermann - Fischer Patentanwaltsgesellschaft mbH Ridlerstrasse 55 80339 München (DE)**

(56) Entgegenhaltungen:
**DE-A- 10 021 503     DE-C- 19 807 253
US-A- 3 237 028     US-A- 3 314 062**

**Beschreibung**

Die Erfindung betrifft ein Verfahren zur Erfassung von Kommutierungsimpulsen eines Lüftermotors. Außerdem betrifft die Erfindung eine Schaltungsanordnung zur Durchführung des Verfahrens.

Insbesondere Computernetzteile höherer Leistung brauchen zu ihrer Kühlung elektronisch kommutierte Lüfter. Zur Kontrolle und zu Regelzwecken will man ihre Drehzahl elektronisch erfassen.

Bisher ist es bekannt, zu diesem Zweck Speziallüfter einzusetzen, die ein internes Taktsignal der elektronischen Kommutierung über eine zusätzliche Leitung nach außen führen. Problematisch ist hierbei, daß solche Lüfter einen wesentlich höheren Preis haben und daher deren Einsatz möglichst vermieden werden soll.

Außerdem ist bekannt, Stromschwankungen des Lüfters über einen Strommeßwiderstand zu erfassen und das Meßsignal über eine Filterschaltung auszukoppeln. Durch Differenzierung und anschließende Impulsformung erhält man ein die Drehzahlinformation beinhaltendes Signal.

Der Vorgang der Kommutierung ist dadurch erkennbar, daß sich der Strom zu diesem Zeitpunkt in sehr kurzer Zeit stark ändert. Die Änderungsgeschwindigkeit liegt mindestens um den Faktor 10 höher, als die Änderungsgeschwindigkeit.des Stroms, die durch die Gegen-EMK des Motors hervorgerufen wird.

Bisher wurden diese Kommutierungsimpulse ausgekoppelt, indem man ihren Gleichstromanteil entfernte und auf geeignete Art aus dem verbleibenden Wechselstromanteil die Anteile mit hoher Änderungsgeschwindigkeit zu Impulsen formte. Einige Verfahren arbeiten mit festen Schaltschwellen. Dabei sind sowohl Verfahren bekannt, die mit Hilfe eines Kondensators arbeiten, als auch Verfahren, die auf digitaler Basis mit D/A-Wandlern arbeiten.

Ein Verfahren, das auf digitaler Basis mit einem D/A-Wandler arbeitet, ist aus der DE 100 21 503 A1 bekannt. Es werden einem Motorstrom proportionale Spannungswerte ausgewertet, wozu ein Komparator eingesetzt wird, der durch Vergleich mit einem Schwellwert einen Aufwärts-/Abwärtszähler steuert. Dessen Zählerstand bestimmt nach einer Digital-Analog-Wandlung wiederum den Schwellwert für den Komparator. Auf diese Weise wird der Gleichstromanteil aus den Spannungswerten entfernt. Anhand der Folge der Ausgangssignale des Komparators, die den Wechselstromanteil der Spannungswerte widerspiegeln, ist ein Kommutierungssignal erkennbar.

Dies funktioniert aber dann nicht zufriedenstellend, wenn man Lüfter unterschiedlichen Typs oder von unterschiedlichen Herstellern mit der gleichen Steuerschaltung ohne Einstellungsänderung betreiben will.

Um verschiedene Lüftertypen mit unterschiedlichem Betriebsstrom überwachen zu können, kann die maximale Änderungsgeschwindigkeit des Lüfterstroms erfaßt werden und ein bestimmter Prozentsatz davon als Schaltschwelle für die Erkennung einer Kommutierung verwendet werden. Dieses Verfahren hat jedoch gravierende Nachteile. In dem Fall, daß der Lüfter blockiert, muß die Blockierung für eine angeschlossene Überwachungseinheit erkennbar sein. Es dürfen auf keinen Fall Kommutierungsimpulse fehlerhaft hinzugefügt werden, obwohl sich der Lüfter nicht dreht. Genau dies passiert aber bei einem solchen Erkennungsverfahren, wie im folgenden erläutert wird. Findet wegen einer solchen Blockierungsituation keine Kommutierung mehr statt, wird der Betriebsstrom deshalb nicht mehr schwanken, der Wechselstromanteil geht somit gegen Null. Folglich sinkt auch die Schaltschwelle für die Erkennung eines Kommutierungsimpulses auf einen minimalen Wert. Schwankt nun die Betriebsspannung des blockierten Lüfters, beispielsweise wenn andere Verbraucher wie Festplatten oder Prozessoren mit aktivierten Energiesparfunktionen am gleichen Netzteil Lastsprünge erzeugen, ohne daß der Lüfter sich dreht, so schwankt auch der Strom des blockierten Lüfters, da dieser bei Blockierung ohmsches Verhalten zeigt.

Die Folge ist, daß die Kommutierungserkennungsschaltung in fehlerhafter Weise Impulse erkennt, obwohl der Lüfter blockiert ist. Ein blockierter Lüfter ist somit nicht mehr zuverlässig erkennbar und es besteht die Gefahr einer schnellen Überhitzung des zu kühlenden Geräts.

Die Aufgabe der vorliegenden Erfindung liegt daher darin, die Erkennung von Kommutierungsimpulsen auch bei Einsatz unterschiedlicher Lüftertypen zu ermöglichen und dabei die fehlerhafte Erkennung von Kommutierungsimpulsen bei blockiertem Lüfter zuverlässig zu verhindern.

Diese Aufgabe wird durch ein Verfahren zur Erfassung von Kommutierungsimpulsen eines Lüftermotors gelöst mit den Schritten: fortlaufende Erfassung und Speicherung von dem Lüfterstrom proportionalen Meßspannungswerten in vorbestimmten Zeitabständen, fortlaufende Auswertung der Meßspannungswerte durch Bildung des Verhältnisses zweier zeitlich beabstandeter Meßwerte und Vergleich dieses Verhältnisses mit vorbestimmten Grenzwertbedingungen und Ausgabe eines Ergebnissignals, wenn das Verhältnis die vorbestimmten Grenzwertbedingungen erfüllt.

Eine vorteilhafte Ausgestaltung einer Schaltungsanordnung zur Durchführung des Verfahren ist in Anspruch 6 angegeben.

Der Vorteil des erfindungsgemäßen Verfahrens besteht darin, daß neben der zeitlichen Änderung des Lüfterstroms auch der lüfterabhängige Gleichstromanteil berücksichtigt wird. Dies ist dadurch möglich, daß die Meßspannung selber und nicht deren zeitliche Ableitung zur Auswertung verwendet wird.

Besonders einfach ist die Auswertung, wenn die Meßspannungswerte als davon abhängige Zeitwerte in Zählern gespeichert werden und bei der Umwandlung in Zeitwerte der Logarithmus der Meßspannungswerte gebildet wird.

Weitere vorteilhafte Ausgestaltungen des Verfahrens und der Schaltungsanordnung sind in den Unteransprüchen angegeben.

Die Erfindung wird nachfolgend anhand von Ausführungsbeispielen näher erläutert. Es zeigt

Figur 1    eine Schaltungsanordnung in einem ersten Ausfüh- rungsbeispiel,

Figur 2    eine Schaltungsanordnung in einem zweiten Ausfüh- rungsbeispiel mit Bereichsumschaltung und

Figur 3    eine Schaltungsanordnung in einem dritten Ausfüh- rungsbeispiel mit einem Schieberegister.

Erfindungsgemäß erfolgt eine Messung und zeitabhängige Bewertung des Verhältnisses aufeinander folgender Spannungswerte zum Beispiel an einem Strommeßwiderstand. Dadurch kann die Stromschaltschwelle der Kommutierungsimpulserkennung auf einen Verhältniswert eingestellt werden, der höher ist als die maximal vorkommenden Betriebsspannungsschwankungen. Wird bei einer maximalen erlaubten Betriebsspannungsschwankung von $\pm 5\%$ die Stromschaltschwelle auf z. B. $\pm 10\%$ oder mehr eingestellt, kann bei Betriebsspannungssprüngen und blockiertem Lüfter kein Fehlimpuls mehr ausgelöst werden, da die Stromschwankungen auch nur bei $\pm 5\%$ liegen können. Die Stromänderung des Lüfters wird innerhalb eines bestimmten Zeitintervalls gemessen, zum Beispiel innerhalb von 2% des Zeitabstands zwischen zwei Kommutierungsimpulsen des Lüfters, um sicherzustellen, daß es sich um eine schnelle Änderung handelt. Langsame Stromänderungen erreichen die Stromschaltschwelle daher nicht im angegebenen Zeitintervall, lösen daher auch kein Ausgangssignal aus.

Diese Erkennung hängt nicht mehr vom absoluten Wert des Lüfter-Versorgungsstroms ab, ist also für alle Lüftertypen ohne Anpassung geeignet.

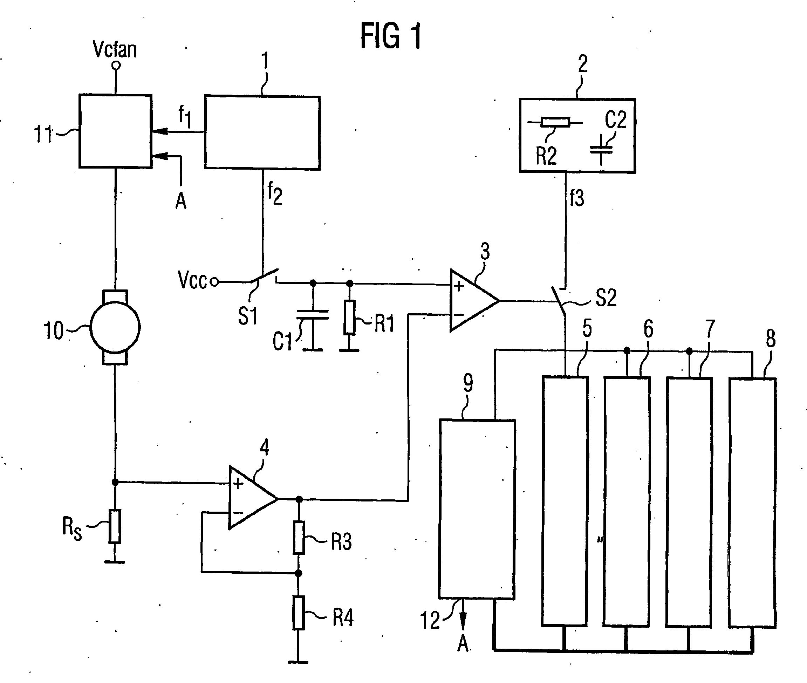

Die erfindungsgemäße Kommutierungsimpulserkennung in Figur 1 weist einen ersten Oszillator 1, einen zweiten Oszillator 2, einen Kondensator C1 mit einer durch einen Schalter S1 und einen Widerstand R1 gebildete Lade- und Entladevorrichtung, einen Komparator 3, dessen Ausgang einen Schalter S2 ansteuert, einen Eingangsverstärker 4, dessen Verstärkung durch zwei Widerstände R3 und R4 eingestellt ist, mehrere Zähler, nämlich vier 8-Bit Zähler 5, 6, 7 und 8 und eine Ablaufsteuerung 9 auf. Der erste Oszillator 1 ist dabei ein Oszillator, der eine Frequenz f2 erzeugt, die einem Vielfachen der Solldrehzahl f1 des Lüfters entspricht. Die Solldrehzahl f1 des Lüfters und diese Frequenz f2 stehen also in einem konstanten Verhältnis zueinander.

Der zweite Oszillator 2 liefert dagegen Zählimpulse mit einer Frequenz f3 für die bei der Stromerfassung benötigten Zählvorgänge.

Der an einem Strommeßwiderstand RS abgegriffene Lüfterstrom wird dem Eingang des Eingangsverstärkers 4 zugeführt und von diesem als Spannung abgebildet, indem der Spannungsabfall des Lüfterstroms an RS verstärkt wird. Im Takt des ersten Oszillators 1 wird der zuvor auf Vcc geladene Kondensator C1 über den Widerstand R1 entladen. Dies geschieht z.B. 100 mal im Zeitintervall zwischen zwei Lüfterkommutierungen. Die dabei jeweils entstehende Entladungskurve ist eine e-Funktion.

Während der Entladung wird mittels eines Komparators 3 die Entladungskurve mit dem momentanen Lüfterstrom am Ausgang des Eingangsverstärkers 4 verglichen. Solange der Kondensator C1 eine höhere Spannung hat als der Eingangsvestärker 4, wird der zweite Oszillator 2 über den Schalter S2 auf die Zähler durchgeschaltet. Das bedeutet, daß jeweils aktivierte Zähler genau so viel Zählerimpulse bekommen, wie es einem logarithmischen Abbild des momentanen Lüfterstroms entspricht. Eine niedrige Zahl entspricht dabei einem hohen Strom, eine hohe Zahl einem niedrigen Strom.

Um nun einen Vergleich der zeitlich aufeinander folgenden Meßwerte des Lüfterstroms auf einer Basis von Verhältnissen durchzuführen, müssen die Differenzen der aufeinander folgenden Meßwerte untersucht werden, da die Differenzen von logarithmischen Zahlenwerten ein Maß für ihr Verhältnis zueinander sind. Der Vergleich ist also besonders einfach, weil für die Verhältnisbildung die Differenzen der Zählerstände verwendet werden können.

Die Differenzwertbildung ist im folgenden näher beschrieben, wobei in diesem Ausführungsbeispiel vier Zähler mit je 8 Bit verwendet werden. Im folgenden werden die Zählerstände des ersten Zählers 5 mit Z1, des zweiten Zählers 6 mit Z2, des dritten Zählers 7 mit Z3 und des vierten Zählers 8 mit Z4 bezeichnet. Ein Ablaufzähler in der Ablaufsteuerung 9 adressiert reihum die Zähler. Dabei gibt es vier unterschiedliche Zählabläufe.

Zählablauf 1:

Der Zählablauf 1,beginnt, indem der vierte Zähler 8 auf "0" gesetzt, der Schalter S1 ausgeschaltet, der Kondesator C1 entladen und der Schalter S2 eingeschaltet wird. Zählimpulse des zweiten Oszillators 2 zählen nun die Zähler 8 und 5 hoch. Wenn S2 ausschaltet, spätestens aber nach dem 127. Zählimpuls, stoppen beide Zähler 5 und 8, da das höchstwertige Bit der 8-Bit-Zähler für die Differenzwertbildung benötigt wird.

Die Anzahl der aufsummierten Zählimpulse für den Lüfterstrom nach dem Zeitintervall t sei Z(t) mit Z(t) ≤ 127. Der Inhalt des vierten Zählers 8 ist daher "Z4 = z(t)". Danach wird der Inhalt des vierten Zählers 8 bitweise invertiert. Die Invertierung bewirkt das gleiche wie eine Subtraktion "255 - Z(t)". Der Inhalt des vierten Zählers 8 ist nun "Z4 = 255 - Z(t)". Der Inhalt des ersten Zählers 5 wurde am Anfang nicht auf "0" gesetzt, sein Inhalt ist vor Zählbeginn im eingeschwungenen Zustand "Z1 = 255 - Z(t-3)".

Nach der Zählung (nach Zeitintervall t) ist der neue Inhalt des ersten Zählers 5 "Z1 = 255 - Z(t-3) + Z(t)". Nach Umstellung der Gleichung und Umwandlung von "255" in "-1" ergibt sich "Z1 = Z(t) - Z(t-3) - 1". Der Inhalt des ersten Zählers 5, also Z1, stellt das Verhältnis zwischen dem Lüfterstrom zum Zeitpunkt t zu dem Strom zum Zeitpunkt t-3 dar (minus 1). Daher wird Z1 nun mit zwei festen Zahlengrenzwerten verglichen, die jeweils eine positive P und eine negative Stromänderungsgeschwindigkeit N als Verhältnis oder als Prozentwert darstellen. Ist die Stromänderungsgeschwindigkeit nun betragsmäßig höher als P oder höher als N, handelt es sich um einen Lüfterkommutierungsimpuls, der von der Ablaufsteuerung erkannt und am Ausgang 12 als "Lüfterimpuls" signalisiert wird.

Als Beispiel sei der Grenzwert für die positive Änderungsgeschwindigkeit P = 248 und der Grenzwert für die negative Änderungsgeschwindigkeit sei N = 15. Die Zahl 248 entspricht dem invertierten Wert von 7, d.h. dieser Wert ergibt sich wenn Z(t) um (7+1) kleiner ist als der Wert Z(t-3). Ist nun der Inhalt von Z1 niedriger als P = 248, war Z(t) mindestens um (8+1) = 9 kleiner als Z(t-3).

Ein kleinerer Zahlenwert bedeutet einen höheren Lüfterstrom, es handelt sich also um eine positive Stromänderung, die als Kommutierung erkannt wurde. Ist dagegen der Inhalt des ersten Zählers 5 höher als N = 15, war Z(t) mindestens um (15+1) = 16 größer als Z(t-3). Ein höherer Zahlenwert bedeutet einen niedrigeren Lüfterstrom, es handelt sich also um eine negative Stromänderung, die als Kommutierung erkannt wurde. Die Erkennung einer Kommutierung erfolgt also immer dann, wenn N < Z1 < P ist. Ist das der Fall, wird der Ausgang 12 auf "1" gesetzt entsprechend einem Signal "Lüfterimpuls", wenn nicht, dann auf "0". Durch Begrenzung der Zählerimpulse auf 127 kann keine Doppeldeutigkeit des Ergebnisses auftreten.

Der Kondesator C1 wird nun wieder aufgeladen.

In gleicher Weise, nur um jeweils eine Zählerposition weitergeschaltet, arbeiten die anderen Zählabläufe.

Zählablauf 2:

Der Zählablauf 2 beginnt, indem der erste Zähler 5 auf "0" gesetzt, der Schalter S1 ausgeschaltet, der Kondesator C1 entladen und der Schalter S2 eingeschaltet wird. Zählimpulse des zweiten Oszillators 2 zählen nun den ersten Zähler 5 und den zweiten Zähler 6 hoch. Wenn der Schalter S2 ausschaltet, spätestens aber nach dem 127. Zählimpuls, stoppen beide Zähler 5 und 6, da das höchstwertige Bit der 8-Bit-Zähler für die Differenzwertbildung benötigt wird.

Die Anzahl der Zählimpulse für den Lüfterstrom zum Zeitpunkt t+1 sei Z(t+1) mit Z(t+1) ≤ 127. Der Inhalt des ersten Zählers 5 ist daher "Z1 = Z(t+1)". Danach wird der Inhalt des ersten Zählers 5 bitweise invertiert. Der Inhalt des ersten Zählers 5 ist nun "Z1 = 255 - Z(t+1)". Der Inhalt des zweiten Zählers 6 wurde am Anfang nicht auf "0" gesetzt, sein Inhalt ist vor Zählbeginn im eingeschwungenen Zustand "Z2 = 255 - Z (t-2) " .

Nach der Zählung, also am Ende des Zeitintervalls (t+1), ist der neue Inhalt des zweiten Zählers 6 "Z2 = 255 - Z(t-2) + Z(t+1) = Z(t+1) - Z(t-2)-1". Der Inhalt des zweiten Zählers 6, also Z2, stellt das Verhältnis zwischen dem Lüfterstrom zum Zeitpunkt t+1 zu dem Strom zum Zeitpunkt t-2 dar (minus 1). Z2 wird nun wieder mit den zwei festen Zahlengrenzwerten verglichen, die jeweils eine positive P und eine negative Stromänderungsgeschwindigkeit N als Verhältnis oder als Prozentwert darstellen. Die Erkennung einer Kommutierung erfolgt, wenn N < Z2 < P. Ist das der Fall, wird der Ausgang 12 auf "1" gesetzt entsprechend dem Signal "Lüfterimpuls", wenn nicht, dann auf "0".

Der Kondesator C1 wird nun wieder aufgeladen.

Zählablauf 3:

Der Zählablauf 3 beginnt, indem der zweite Zähler 6 auf "0" gesetzt, der Schalter S1 ausgeschaltet, der Kondesator C1 entladen und der Schalter S2 eingeschaltet wird. Zählimpulse des zweiten Oszillators 2 zählen nun den zweiten Zähler 6 und den dritten Zähler 7 hoch. Wenn der Schalter S2 ausschaltet, spätestens aber nach dem 127. Zählimpulse, stoppen beide Zähler 6 und 7, da das höchstwertige Bit der 8-Bit-Zähler für die Differenzwertbildung benötigt wird.

Die Anzahl der Zählimpulse für den Lüfterstrom zum Zeitpunkt t+2 sei Z(t+2) mit Z(t+2) 5 127. Der Inhalt des zweiten Zählers 6, also Z2, ist daher "Z2 = Z(t+2)". Danach wird der Inhalt des zweiten Zählers 6 bitweise invertiert. Sein Inhalt ist nun: "Z2 = 255 - Z(t+2)". Der Inhalt des dritten Zählers 7 wurde am Anfang nicht auf °0" gesetzt, sein Inhalt ist vor Zählbeginn im eingeschwungenen Zustand "Z3 = 255 - Z(t-1)".

Nach der Zählung, also am Ende von Zeitintervall t+2, ist der neue Inhalt des dritten Zählers 7 "Z3 = 255 - Z(t-1) + Z(t+2) = Z(t+2) - Z(t-1) - 1". Der Inhalt von Z3 stellt das Verhältnis zwischen dem Lüfterstrom zum Zeitpunkt t+2 zu dem Strom zum Zeitpunkt t-1 dar (minus 1). Der Inhalt von Z3 wird nun wieder mit den zwei festen Zahlengrenzwerten verglichen, die jeweils eine positive P und eine negative Stromänderungsgeschwindigkeit N als Verhältnis oder als Prozentwert darstellen. Die Erkennung einer Kommutierung erfolgt, wenn N < Z3 < P ist. Ist das der Fall, wird der Ausgang 12 auf "1" gesetzt entsprechend dem Signal "Lüfterimpuls", wenn nicht, dann auf "0" .

Der Kondensator C1 wird nun wieder aufgeladen.

Zählablauf 4:

Der Zählablauf 4 beginnt, indem der dritte Zähler 7 auf "0" gesetzt, der Schalter S1 ausgeschaltet, der Kondesator C1 entladen und der Schalter S2 eingeschaltet wird. Zählimpulse des zweiten Oszillators 2 zählen nun den dritten Zähler 7 und den vierten Zähler 8 hoch. Wenn der Schalter S2 ausschaltet, spätestens aber nach dem 127. Zählimpuls, stoppen beide Zähler 7 und 8, da das höchstwertige Bit der 8-Bit-Zähler für die Differenzwertbildung benötigt wird.

Die Anzahl der Zählimpulse für den Lüfterstrom zum Zeitpunkt t+3 sei Z(t+3) mit Z(t+3) $\leq$ 127. Der Inhalt des dritten Zählers 7, also Z3, ist daher "Z3 = Z(t+3)". Danach wird der Inhalt des dritten Zählers 7 bitweise invertiert. Der Inhalt des dritten Zählers 7 ist nun "Z3 = 255 - Z(t+3)". Der Inhalt des vierten Zählers 8 wurde am Anfang nicht auf "0" gesetzt, sein Inhalt ist vor Zählbeginn im eingeschwungenen Zustand "Z4 = 255 - Z(t) ".

Nach der Zählung, also am Ende des Zeitintervalls t+3, ist der neue Inhalt des vierten Zählers 8 "Z4 = 255 - Z(t) + Z(t+3) = Z(t+3) - Z(t) - 1". Z4 stellt das Verhältnis zwischen dem Lüfterstrom zum Zeitpunkt t+3 zu dem Strom zum Zeitpunkt t dar (minus 1). Der Inhalt von Z4 wird nun wieder mit den zwei festen Zahlengrenzwerten verglichen, die jeweils eine positive P und eine negative Stromänderungsgeschwindigkeit N als Verhältnis oder als Prozentwert darstellen. Die Erkennung einer Kommutierung erfolgt, wenn N < Z4 < P ist. Ist das der Fall, wird der Ausgang 12 auf "1" gesetzt entsprechend dem Signal "Lüfterimpuls", wenn nicht, dann auf "0".

Der Kondesator C1 wird nun wieder aufgeladen.

Von nun an wiederholen sich die Zählabläufe, das heißt, Zählablauf 5 ist identisch mit Zählablauf 1, Zählablauf 6 ist identisch mit Zählablauf 2, usw.

Die Zeitkonstante der Kondensatorentladung von C1 über R1 wird so gewählt, daß während des zu erfassenden Eingangsspannungsbereichs 127 Impulse des zweiten Oszillators 2 gezählt werden können. Soll zum Beispiel am Ausgang des Eingangsverstärkers 4 ein Erfassungsbereich von 5V bis 50mV gewählt werden, muß der Kondensator C1 durch R1 innerhalb von 127 Impulsen des zweiten Oszillators 2 von 5V auf 50mV entladen werden.

Um eine ausreichende Zeitauflösung des Stroms bei gleichzeitig sehr schnell drehendem Lüfter zu erhalten, kann es notwendig sein, daß der zweite Oszillator 2 mit einer sehr hohen Frequenz f3 arbeiten muß. Um das zu vermeiden, kann in einer Weiterbildung der Erfindung der Eingangsverstärker 4 in der Verstärkung umschaltbar ausgebildet werden.

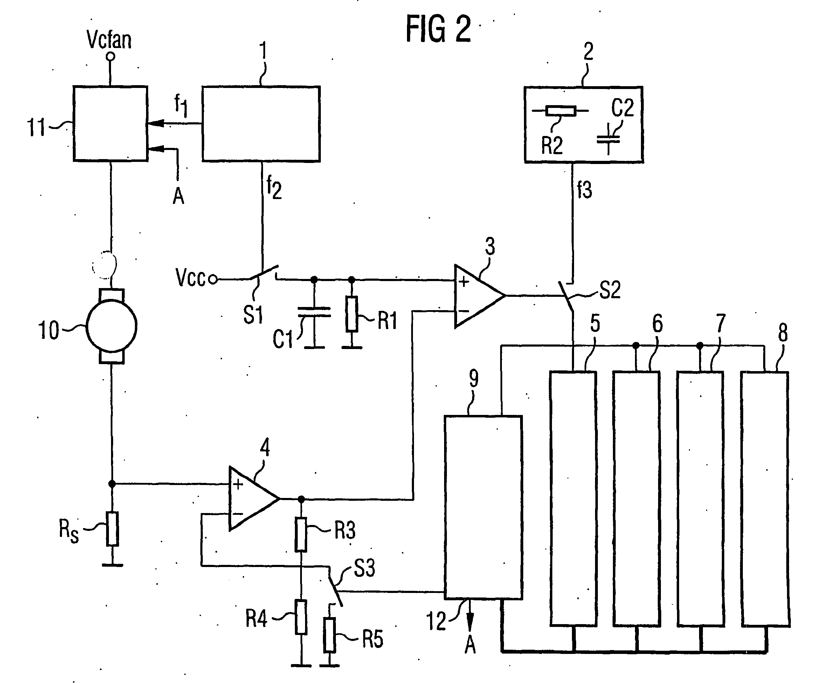

Dies ist in Figur 2 gezeigt. Zu dem Widerstand R4 wird im Bedarfsfall ein Widerstand R5 parallel geschaltet, um die Verstärkung definiert anzuheben. Soll zum Beispiel am Ausgang des Eingangsvestärkers 4 wieder ein Erfassungsbereich von 5V bis 50mV gewählt werden, wird dieser Bereich in zwei Teilbereiche eingeteilt. Wird in einer beispielhaften Ausführung die Verstärkung des Eingangsvestärkers 4 durch Umschaltung verzehnfacht, muß die Umwandlung der Eingangsspannung über den Widerstand R1, den Kondensator C1 und den zweiten Oszillator 2 einen Eingangsspannungsbereich von 5V bis 500mV im gleichen Zeitraum wie vorher überstreichen. Das heißt, daß bei gleicher Genauigkeit wie vorher der zweite Oszillator 2 durch die Umschaltung der Verstärkung nur noch die Hälfte der vorherigen Arbeitsfrequenz braucht, da bei logarithmischer Wandlung eine Reduzierung des Verhältnisses von 100 auf 10 einer Halbierung des Ergebnisses entspricht.

Die Zähler 5 bis 8 werden nur noch als 7-Bit-Zähler ausgebildet, von denen 6 Bit zum Zählen genutzt werden. Der oberste Zählwert während einer Zählung ist daher 63, also nicht mehr 127 wie im vorhergehenden Ausführungsbeispiel. Die Umschaltung der Verstärkung und damit der Bereiche erfolgt als Ergebnis eines Vergleichs des jeweils vorherigen Zählwerts, also zum Zeitpunkt t-1, mit fest eingestellten Schwellwerten, die auf eine bevorstehende Bereichsüberschreitung hinweisen.

Damit durch eine falsche Prognose, durch die eine Bereichsumschaltung bewirkt wird, keine Kommutierungsereignisse übersehen werden, muß eine gewisse Überlappung zwischen dem unteren und dem oberen Bereich existieren. Dieser Uberlappungsbereich ist abhängig von dem Prozentwert oder Verhältnis, ab dem eine Eingangsspannungsänderung als Kommutierung erkannt wird. Der Überlappungsbereich muß mindestens zweimal so groß sein wie das nötige Verhältnis für eine Kommutierungserkennung.

Bei einer Definition von $\pm 10\%$ Eingangsspannungsänderung für eine Kommutierung könnte die Verstärkungsumschaltung bei Faktor 10 minus 20%, also bei Faktor 8 liegen. Gleichzeitig wird die Zeitkonstante der Entladung des Kondensators von C1 über den Widerstand R1 so gewählt, daß beim Durchlaufen von 6 Bit = 63 Zählerimpulsen ein Spannungsbereich von 10fach + 20% = 12fach entsteht, das heißt, von 5V bis 417mV. Befindet sich nun die Erkennungsvorrichtung im niedrigverstärkenden Bereich, das heißt bei hohen Stromwerten, arbeitet sie normal, wie anhand der Zählabläufe 1 bis 4 beschrieben. Wird jedoch die 8-fache Verstärkung eingeschaltet, wird dieser Umstand für den später erfolgenden Vergleich mit P und N als 1-Bit-Verstärkungswert gespeichert, da später die Vergleichswerte gegebenenfalls angepasst werden müssen.

Im vorherigen Beispiel ohne Bereichsumschaltung entsprach ein Verhältnis von 100 einem Zählwert von 127.. Hier entspricht ein Verhältnis von 8 ungefähr dem Zählwert 57.

Je nach Zeitpunkt der Bereichsumschaltung gibt es vier Fälle. Die Fälle 1 und 2 sind im folgenden anhand des Zählablaufs 1 dargestellt mit einer Bereichsumschaltung auf 8-fache Verstärkung.

Der Zählablauf 1 beginnt, indem die Verstärkung auf 8 geschaltet, das Verstärkungsbit auf "1" gesetzt, der vierte Zähler 8 auf "0" gesetzt, der Schalter S1 ausgeschaltet, der Kondensator C1 entladen und der Schalter S2 eingeschaltet wird. Zählimpulse des zweiten Oszillators 2 zählen nun den vierten Zähler 8 und den ersten Zähler 5 hoch. Wenn der Schalter S2 ausschaltet, spätestens aber nach dem Zählwert 63 in dem vierten Zähler 8, stoppen beide Zähler 5 und 8, da das höchstwertige Bit der 7-Bit-Zähler für die Differenzwertbildung benötigt wird. Die Anzahl der Zählimpulse für den Lüfterstrom zum Zeitpunkt t sei Z(t) mit Z(t) $\leq$63. Der Inhalt des vierten Zählers 8 ist daher "Z = Z(t)". Danach wird der Inhalt des vierten Zählers 8 bitweise invertiert. Die Invertierung bewirkt das gleiche wie eine Subtraktion "127 - Z(t)". Der Inhalt des vierten Zählers 8, also Z4, ist nun "Z4 = 127 - Z(t)". Für den ersten Zähler 5 gilt nun Fall 1 oder Fall 2.

Fall 1:

In diesem Fall ist zum Zeitpunkt t-3 auch schon die 8-fache Verstärkung eingeschaltet. Der Inhalt des ersten Zählers 5 wurde am Anfang nicht auf "0" gesetzt, so daß sein Inhalt vor Zählbeginn im eingeschwungenen Zustand "Z1 = 127 - Z(t-3)" ist. Nach der Zählung (nach Zeitintervall t) ist der neue Inhalt des ersten Zählers 5 "Z1 = 127 - Z(t-3)) + Z(t)". Beide Werte Z(t-3) und Z(t) müßten eigentlich um den Korrekturwert 57 erhöht werden, was der 8-fachen Verstärkung entspricht. Bei der Subtraktion fällt jedoch dieser Korrekturwert heraus. Daher kann ganz normal weiter verfahren werden. Z1 wird mit den zwei festen Zahlengrenzwerten verglichen, die jeweils eine positive P und eine negative Stromänderungsgeschwindigkeit N als Verhältnis oder als Prozentwert darstellen. Ist die Stromänderungsgeschwindigkeit im ersten Zähler 5 nun betragsmäßig höher als P oder höher als N, handelt es sich um einen Lüfterkommutierungsimpuls, der von der Ablaufsteuerung erkannt und am Ausgang 12 signalisiert wird. Die Erkennung einer Kommutierung erfolgt dabei, wenn N < Z1 < P gilt.

Fall 2:

In diesem Fall ist zum Zeitpunkt t-3 noch die normale Verstärkung eingeschaltet. Der Inhalt des ersten Zählers 5 wurde ebenfalls am Anfang nicht auf "0" gesetzt, so daß sein Inhalt vor Zählbeginn im eingeschwungenen Zustand "Z1 = 127 - Z(t-3)" ist. Nach der Zählung (nach Zeitintervall t) ist der neue Inhalt des ersten Zählers 5 "Z1 = 127 - Z(t-3)) + Z(t)".

Der Wert Z(t) müßte eigentlich um den Korrekturwert 57 erhöht werden, was der 8-fachen Verstärkung entspricht. Eine Addition ist jedoch aufwendig, außerdem erfolgt dann direkt danach der Vergleich mit den Grenzwerten P und N. Daher wird stattdessen Z1 mit zwei korrigierten festen Zahlengrenzwerten verglichen, die jeweils eine positive (P - 57) und eine negative Stromänderungsgeschwindigkeit (N - 57) als Verhältnis oder als Prozentwert darstellen. Ist die Stromänderungsgeschwindigkeit gemäß Z1 nun ausserhalb der Werte P - 57 und N - 57, handelt es sich um einen Lüfterkommutierungsimpuls, der von der Ablaufsteuerung erkannt und am Ausgang 12 signalisiert wird. Die Erkennung einer Kommutierung erfolgt, wenn N-57 < Z1 < P-57 ist.

Für die Fälle 3 und 4 wird der Zählablauf 1 mit Bereichsumschaltung auf normaler Verstärkung betrachtet.

Der Zählablauf 1 beginnt, indem die Verstärkung auf normal geschaltet wird, also R5 nicht parallel geschaltet ist, das Verstärkungsbit auf 0 gesetzt, der vierte Zähler 8 auf "0" gesetzt, der Schalter S1 ausgeschaltet, der Kondesator C1 entladen und der Schalter S2 eingeschaltet wird. die Zählimpulse des zweiten Oszillators 2 zählen nun Zähler 8 und 5 hoch. Wenn der Schalter S2 ausschaltet, spätestens aber nach dem Zählwert 63 in dem vierten Zähler 8, stoppen beide Zähler, da das höchstwertige Bit der 7-Bit-Zähler für die Differenzwertbildung benötigt wird.

Die Anzahl der Zählimpulse für den Lüfterstrom zum Zeitpunkt t sei Z(t) mit Z(t) ≤ 63. Der Inhalt des vierten Zählers 8 ist daher Z4 = Z(t). Danach wird der Inhalt des vierten Zählers 8 bitweise invertiert. Die Invertierung bewirkt das gleiche wie eine Subtraktion "127 - Z(t)". Der Inhalt des vierten Zählers 8, also Z4, ist nun "Z4 = 127 - Z(t)". Für den ersten Zähler 5 ergeben sich nun die Fälle 3 und 4.

Fall 3:

In diesem Fall ist zum Zeitpunkt t-3 auch schon die normale Verstärkung (ohne RS) eingeschaltet. Der Inhalt des ersten Zählers 5 war vor Zählbeginn im eingeschwungenen Zustand "Z1 = 127 - Z(t-3)". Nach der Zählung (nach Zeitintervall t) ist der neue Inhalt des ersten Zählers 5, also Z1, "Z1 = 127 - Z(t-3) + Z(t)".

Der Inhalt von Z1 wird mit den zwei festen Zahlengrenzwerten verglichen, die jeweils eine positive P und eine negative Stromänderungsgeschwindigkeit N als Verhältnis oder als Prozentwert darstellen. Ist die Stromänderungsgeschwindigkeit in Z1 nun ausserhalb der Werte P und N, handelt es s.ich um einen Lüfterkommutierungsimpuls, der von der Ablaufsteuerung erkannt und am Ausgang 12 als "Lüfterimpuls" signalisiert wird. Die Erkennung einer Kommutierung erfolgt, wenn N < Z1 < P ist.

Fall 4:

In diesem Fall ist zum Zeitpunkt t-3 die 8-fache Verstärkung eingeschaltet. Der Inhalt des ersten Zählers 5 war vor Zählbeginn im eingeschwungenen Zustand "Z1 = 127 - Z(t-3)". Das Verstärkungsbit ist auf 1, d.h. der korrigierte Wert von Z1 wäre eigentlich 127 - (Z(t-3) + 57). Nach der Zählung (nach Zeitintervall t) ist der neue Inhalt des ersten Zählers 5 "Z1 = 127 - Z(t-3)) + Z(t)". Der Wert Z1 müßten eigentlich um den Korrekturwert 57 reduziert werden, was der 8-fachen Verstärkung zum Zeitpunkt t-3 entspricht. Eine Subtraktion ist jedoch aufwendig, außerdem erfolgt dann direkt danach der Vergleich mit den Grenzwerten P und N. Daher wird der Inhalt von Z1 mit zwei korrigierten festen Zahlengrenzwerten verglichen, die jeweils eine positive (P + 57) und eine negative Stromänderungsgeschwindigkeit (N + 57) als Verhältnis oder als Prozentwert darstellen. Ist die Stromänderungsgeschwindigkeit in Z1 nun ausserhalb der Werte P + 57 und N + 57, handelt es sich um einen Lüfterkommutierungsimpuls, der von der Ablaufsteuerung erkannt und am Ausgang 12 als "Lüfterimpuls" signalisiert wird. Die Erkennung einer Kommutierung erfolgt dann, wenn N + 57 < Z1 < P + 57 ist.

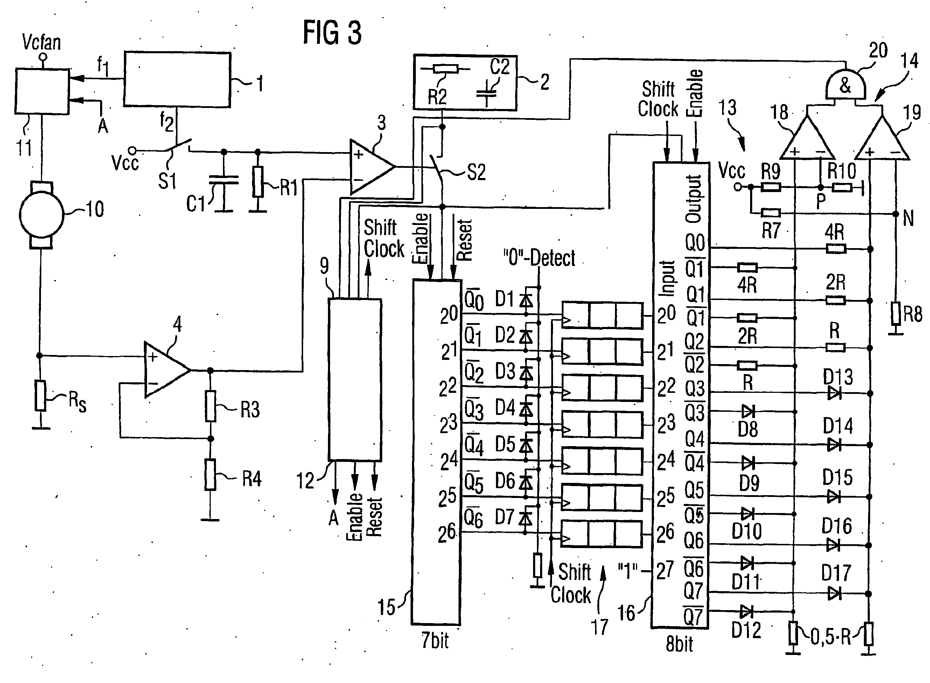

Eine weitere vorteilhafte Ausgestaltung ergibt sich, wenn der zweite und dritte Zähler 6 und 7 durch ein Schieberegister 17 ersetzt werden. Figur 3 zeigt eine solche Ausführung mit einem dreistufigen Schieberegister 17. Funktional entspricht dies einer Anordnung nach Figur 1 mit fünf Zählern.

Jeder Zählablauf beginnt mit einem neuen Impuls vom ersten Oszillator 1.

Zählablauf 1 beginnt, indem der invertierte Inhalt eines ersten Zählers 15 mit einem Signal "Shift-Clock" von der Ablaufsteuerung 9 in das dreistufige Schieberegister übernommen wird und gleichzeitig der älteste Wert Z(t-4) aus dem Schieberegister 17 als Startwert in einen zweiten Zähler 16 geladen wird.

Anschließend wird der erste Zähler 15 auf "0" gesetzt, der Schalter S1 ausgeschaltet, der Kondensator C1 über R1 entladen und der Schalter S2 eingeschaltet. Zählimpulse von dem zweiten Oszillator 2 zählen nun den ersten Zähler 15 und den zweiten Zähler 16 hoch. Wenn S2 ausschaltet, spätestens aber nach dem 127. Zählimpuls (z.B. einfach erkennbar, wenn das Signal "0"-Detect = 0 ist), stoppen beide Zähler 15 und 16, da das höchstwertige Bit des zweiten Zählers 16 wegen der Differenzwertbildung nicht ausgenutzt werden darf.

Die Anzahl der Zählimpulse für den Lüfterstrom zum Zeitpunkt t sei Z(t) mit Z(t)≤127. Der Inhalt des ersten Zählers 15 ist daher "Z1(t) = Z(t)". Der Inhalt des zweiten Zählers 16 war vor dem Beginn des Zählablaufs 1 im eingeschwungenen Zustand und damit auf dem invertierten Wert von Z(t-4) = 255-Z(t-4), da dieser Wert zu einem Zeitpunkt t-4 im ersten Zähler 15 erfaßt worden war und in invertierter Form durch die drei Schieberegisterstufen in den zweiten Zähler 16 geschoben wurde.

Die Schieberegisterstufen werden mit dem Takt des ersten Oszillators 1 über das Signal "Shift-Clock" angesteuert. Bei jeder neuen Strommessung wird daher der vorherige Meßwert jeweils um eine Position nach rechts geschoben, bis er schließlich als Startwert in den zweiten Zähler 16 geladen wird. Daher wird am Ende von Zählablauf 1 folgender Wert im zweiten Zähler 16 stehen:

$$Z2(t) = 255-Z(t-4) + Z(t) = Z(t)-Z(t-4)-1$$

Der Inhalt des zweiten Zählers 16, also Z2, stellt also das Verhältnis zwischen dem Lüfterstrom zum Zeitpunkt t zu dem Strom zum Zeitpunkt t-4 dar (minus 1). Z2 wird nun wieder mit zwei festen Zahlengrenzwerten verglichen, die jeweils eine positive P und eine negative Stromänderungsgeschwindigkeit N als Verhältnis oder als Prozentwert darstellen. Wenn nun P und N relativ kleine Werte sind, kann der Vergleich durch folgende vereinfachte Schaltung erfolgen:

Z2(t) wird durch einen vereinfachten Digital/Analogwandler in eine Analogspannung umgewandelt und in einem Komparator 18 mit dem festen Spannungswert N, der durch den Spanungsteiler aus R7 und R8 festgelegt ist, verglichen. Dies erfolgt mit den Widerständen 4*R, 2*R, R und den Dioden D13 - D17 und dem Summierwiderstand 0,5*R, die jeweils an nicht-invertierte Ausgängen des zweiten Zählers 16 angeschlossen sind.

Diese Anordnung kann gewählt werden für Werte von N bis zum Zahlenwert 7. Für Zahlenwerte bis zu 15 wären Widerstände 8*R, 4*R, 2*R, R die Dioden D14 - D17 und der Summierwiderstand 0,5*R erforderlich.
Der invertierte Wert von Z2(t) = 255-Z2(t) wird gleichzeitig durch einen weiteren vereinfachten Digital/Analogwandler in eine Analogspannung umgewandelt und in einem weiteren Komparator 19 mit dem festen Spannungswert 255-P verglichen. Dies erfolgt mit den Widerständen 4*R, 2*R, R und den Dioden D8 - D12 und dem Summierwiderstand 0,5*R, die an die invertierten Ausgänge des zweiten Zählers 16 angeschlossen sind.
Diese Anordnung kann gewählt werden für Werte von P bis zum Zahlenwert 7. Für Zahlenwerte bis zu 15 wären die Widerstände 8*R, 4*R, 2*R, R, die Dioden D9 - D12 und der Summierwiderstand 0,5*R erforderlich.
Diese vereinfachte Anordnung für die D/A-Wandlung kann gewählt werden, da die höherwertigen Bits mit den Diodenausgängen auf jeden Fall größer als die Vergleichswerte N bzw. P sind, so daß in diesem Fall die genaue Höhe der Analogspannung nicht interessiert. Dadurch müssen die Widerstände 8*R, 4*R usw. nicht so genau sein wie bei einem 8-Bit D/A-Wandler. Die Ergebnisse der Komparatoren 18 und 19 werden in einem UND-Gatter 20 verknüpft und das Resultat wird an die Ablaufsteuerung 9 gemeldet. Ist das Resultat gleich 1, bedeutet dies, daß N < Z2(t) < P ist, was bedeutet, daß eine Kommutierung stattgefunden hat. Das Ergebnis ist natürlich nur dann gültig, wenn die Zählung im zweiten Zähler 16 beendet ist. Die Ablaufsteuerung 9 wird daher nach Beendigung dieser Zählung das Ergebnis des Gatters abfragen und als Lüfterimpuls der Lüfterregelung 11 melden, wenn das Ergebnis eine 1 war.
Der Zählablauf 2 und alle weiteren Zählabläufe sind identisch mit Zählablauf 1. Die Ablaufsteuerung ist in dieser Ausführung gemäß Figur 3 nur noch für die zeitlich korrekte Abfolge der Ansteuersignale verantwortlich.

Bezugszeichenliste

| | |
|---|---|
| 1 | erste Oszillator |
| 2 | zweite Oszillator |
| 3 | Komparator |
| 4 | Eingangsverstärker |
| 5 | erste Zähler |
| 6 | zweite Zähler |
| 7 | dritte Zähler |
| 8 | vierte Tähler |
| 9 | Ablaufsteuerung |
| 10 | Lüfter |
| 11 | Ansteuermittel |
| 12 | Ausgang |
| 13 | D/A-Wandler |
| 14 | D/A-Wandler |
| 15 | erster Zähler |
| 16 | zweiter Zähler |
| 17 | Schieberegister |
| 18 | Komparator |
| 19 | Komparator |
| f1 | Lüfter-Solldrehzahl |
| f2 | zweite Frequenz |

f3        dritte Frequenz
C1        Kondensator
S1        erster Schalter
S2        zweiter Schalter
R1..R9    Widerstände

**Patentansprüche**

1. Verfahren zur Erfassung von Kommutierungsimpulsen eines Lüftermotors mit den Schritten:

   - fortlaufende Erfassung und Speicherung von dem Lüfterstrom proportionalen Meßspannungswerten in vorbestimmten Zeitabständen,
   - fortlaufende Auswertung der Meßspannungswerte durch Bildung des Verhältnisses zweier zeitlich beabstandeter Meßwerte und Vergleich dieses Verhältnisses mit vorbestimmten Grenzwertbedingungen und
   - Ausgabe eines Ergebnissignals, wenn das Verhältnis die vorbestimmten Grenzwertbedingungen erfüllt.

2. Verfahren nach Anspruch 1,
   **dadurch gekennzeichnet, daß** die Meßspannungswerte vor der Auswertung in von diesen abhängige Zeitwerte umgewandelt werden.

3. Verfahren nach Anspruch 2,
   **dadurch gekennzeichnet, daß** bei der Umwandlung der Meßspannungswerte in Zeitwerte der Logarithmus der Meßspannungswerte gebildet wird.

4. Verfahren nach Anspruch 2 oder 3,
   **gekennzeichnet durch** die folgenden Schritte zur Ermittlung der den Meßspannungswerten proportionalen Zeitwerten:

   - Erzeugung einer Spannungskurve,
   - Vergleich der Spannungskurve mit einer dem Lüfterstrom proportionalen Meßspannung,
   - Festhalten einer ersten Zeitdauer zwischen Beginn der Spannungskurve und dem Zeitpunkt der Übereinstimmung der Spannungskurve und der Meßspannung.

5. Verfahren nach Anspruch 4,
   **dadurch gekennzeichnet, daß** die Spannungskurve logarithmisch verläuft.

6. Schaltungsanordnung mit

   - Mitteln (11) zur Ansteuerung eines Lüfters (10),
   - Mitteln zur Erfassung der Kommutierungszeitpunkte des Lüftermotors mit Hilfe eines dem Lüfter in Reihe geschalteten Strommesswiderstandes (RS),
   - Mitteln zur fortlaufenden Erfassung und Speicherung von dem Lüfterstrom proportionalen Messspannungswerten in vorbestimmten Zeitabständen,
   **gekennzeichnet durch**
   - Mittel zur fortlaufenden Auswertung der Messspannungswerte **durch** Bildung des Verhältnisses zweier zeitlich beabstandeter Messwerte und zum Vergleichen dieses Verhältnisses mit vorbestimmten Grenzwertbedingungen und
   - Mittel zur Ausgabe eines Ergebnissignals, wenn das Verhältnis die vorbestimmten Grenzwertbedingung erfüllt.

7. Schaltungsanordnung nach Anspruch 6, **gekennzeichnet durch**

   - einen Kondensator (C1) mit einem parallel geschalteten Entladewiderstand (R1), der **durch** einen ersten Schalter (S1) mit einer Ladespannung (VCC) verbindbar ist, wobei der erste Schalter (S1) mit einer ersten Oszillatorfrequenz (f2) beaufschlagbar ist, die einem Vielfachen der Sollfrequenz des Lüfters (10) entspricht,
   - einen Komparator (3) zum Vergleich der Kondensatorspannung mit einer über dem Strommesswiderstand (RS) abgegriffenen Spannung,
   - einen zweiten Oszillator (2) zur Erzeugung eines Zähltaktsignals,

- einer Zählanordnung mit mindestens zwei Zählern (5, 6, 7, 8) und einer Ablaufsteuerung (9), wobei der zweite Oszillator (2) über einen von dem Komparator (3) gesteuerten zweiten Schalter (S2) mit den Zähleingängen der Zähler verbindbar ist,

- wobei **durch** die Ablaufsteuerung (9) ein jeweils aktiver Zähler bestimmbar ist und die Inhalte der mindestens zwei Zähler (5, 6, 7, 8) miteinander verknüpfbar sind und wobei eine Auswertvorrichtung vorgesehen ist zum Vergleich mit einer vorbestimmten Grenzwertbedingung und zur Erzeugung eines Ergebnissignals.

**8.** Schaltungsanordnung nach Anspruch 7,
**dadurch gekennzeichnet, daß** zwischen einem Abgriff an dem Strommeßwiderstand und dem Komparator ein Verstärker (4, R3, R4, R5, S3) mit mehreren umschaltbaren Verstärkungsbereichen angeordnet ist, wobei die Umschaltung der Verstärkungsbereiche durch ein Signal von der Ablaufsteuerung (9) steuerbar ist.

**9.** Schaltungsanordnung nach einem der Ansprüche 7 oder 8, **dadurch gekennzeichnet, daß** die Oszillatorfrequenz (f2) des ersten Oszillators (1) ein ganzzahliges Vielfaches der Lüftersollfrequenz (f1) ist.

**10.** Schaltungsanordnung nach Anspruch 9,
**dadurch gekennzeichnet, daß** die Oszillatorfrequenz (f2) des ersten Oszillators (1) das Hundertfache der Lüftersollfrequenz (f1) ist.

**11.** Schaltungsanordnung nach Anspruch 6, **gekennzeichnet durch**

- einen Kondensator (C1) mit einm parallel geschalteten Entladewiderstand (R1), der **durch** einen ersten Schalter (S1) mit einer Ladespannung (VCC) verbindbar ist, wobei der erste Schalter (S1) mit einer ersten Oszillatorfrequenz (f2) beaufschlagbar ist, die einem Vielfachen der Sollfrequenz des Lüfters (10) entspricht,
- einen Komparator (3) zum Vergleich der Kondensatorspannung mit einer über dem Strommesswiderstand (RS) abgegriffenen Spannung,
- einen zweiten Oszillator (2) zur Erzeugung eines Zähltaktsignals,
- einer Zählanordnung mit mindestens zwei Zählern (15, 16) und
- einem zwischen den Ausgang des ersten Zählers (15) und den Eingang des zweiten Zählers (16) geschalteten Schieberegister (17) zur Zwischenspeicherung von Zählerständen, wobei der zweite Oszillator (2) über einen von dem Komparator (3) gesteuerten zweiten Schalter (S2) mit den Zähleingängen der Zähler (15, 16) verbindbar ist,
- einer Ablaufsteuerung (9) zur Ansteuerung der Zähler (15, 16) und des Schieberegisters (17) und
- einer Auswertvorrichtung zum Vergleich des Zählerstandes des zweiten Zählers (16) mit einer vorbestimmten Grenzwertbedingung und zur Erzeugung eines Ergebnissignals.

**12.** Schaltungsanordnung nach Anspruch 11,
**dadurch gekennzeichnet, daß** die Auswertevorrichtung zwei Digital/Analog-Wandler (13, 14) und zwei Komparatoren (18, 19) zum Vergleich der gewandelten Werte mit Referenzwerten aufweist.

**13.** Schaltungsanordnung nach einem der Ansprüche 11 oder 12, **dadurch gekennzeichnet, daß** in dem Schieberegister (17) der invertierte Zählerstand des ersten Zählers (15) speicherbar ist.

**Claims**

**1.** Method for detecting commutation pulses of a fan motor, having the steps of:

- continuously detecting and storing measurement voltage values, which are proportional to the fan current, at predetermined intervals of time,
- continuously evaluating the measurement voltage values by forming the ratio of two measured values which are spaced apart in terms of time and comparing this ratio with predetermined limit value conditions, and
- outputting a result signal if the ratio satisfies the predetermined limit value conditions.

**2.** Method according to Claim 1,
**characterized in that**, before evaluation, the measurement voltage values are converted into time values dependent on the latter.

3. Method according to Claim 2,
**characterized in that** the logarithm of the measurement voltage values is formed when converting the measurement voltage values into time values.

4. Method according to Claim 2 or 3,
**characterized by** the following steps for determining the time values which are proportional to the measurement voltage values:

- generating a voltage curve,
- comparing the voltage curve with a measurement voltage proportional to the fan current,
- recording a first period of time between the beginning of the voltage curve and the time at which the voltage curve and the measurement voltage correspond.

5. Method according to Claim 4,
**characterized in that** the voltage curve is logarithmic.

6. Circuit arrangement having

- means (11) for controlling a fan (10),
- means for detecting the commutation times of the fan motor with the aid of a current measurement resistor (RS) connected in series with the fan,
- means for continuously detecting and storing measurement voltage values, which are proportional to the fan current, at predetermined intervals of time, **characterized by**

    - means for continuously evaluating the measurement voltage values by forming the ratio of two measured values which are spaced apart in terms of time and for comparing this ratio with predetermined limit value conditions, and

    - means for outputting a result signal if the ratio satisfies the predetermined limit value conditions.

7. Circuit arrangement according to Claim 6,
**characterized by**

    - a capacitor (C1) having a discharge resistor (R1) which is connected in parallel and can be connected to a charging voltage (VCC) by a first switch (S1), a first oscillator frequency (f2) which corresponds to a multiple of the desired frequency of the fan (10) being able to be applied to the first switch (S1),
    - a comparator (3) for comparing the capacitor voltage with a voltage tapped off across the current measurement resistor (RS),
    - a second oscillator (2) for generating a counting clock signal,
    - a counting arrangement having at least two counters (5, 6, 7, 8) and a sequence controller (9), the second oscillator (2) being able to be connected to the counting inputs of the counters via a second switch (S2) controlled by the comparator (3),
    - a respectively active counter being able to be determined by the sequence controller (9) and the contents of the at least two counters (5, 6, 7, 8) being able to be linked to one another, and an evaluation apparatus being provided for comparison with a predetermined limit value condition and for generating a result signal.

8. Circuit arrangement according to Claim 7,
**characterized in that** an amplifier (4, R3, R4, R5, S3) having a plurality of amplifying regions which can be changed over is arranged between a tap at the current measurement resistor and the comparator, the changeover of the amplifying regions being able to be controlled by a signal from the sequence controller (9).

9. Circuit arrangement according to either of Claims 7 and 8, **characterized in that** the oscillator frequency (f2) of the first oscillator (1) is an integer multiple of the fan desired frequency (f1).

10. Circuit arrangement according to Claim 9,
**characterized in that** the oscillator frequency (f2) of the first oscillator (1) is one hundred times the fan desired frequency (f1).

**11.** Circuit arrangement according to Claim 6,
**characterized by**

- a capacitor (C1) having a discharge resistor (R1) which is connected in parallel and can be connected to a charging voltage (VCC) by a first switch (S1), a first oscillator frequency (f2) which corresponds to a multiple of the desired frequency of the fan (10) being able to be applied to the first switch (S1),
- a comparator (3) for comparing the capacitor voltage with a voltage tapped off across the current measurement resistor (RS),
- a second oscillator (2) for generating a counting clock signal,
- a counting arrangement having at least two counters (15, 16), and
- a shift register (17) which is connected between the output of the first counter (15) and the input of the second counter (16) and is intended to buffer counter readings, the second oscillator (2) being able to be connected to the counting inputs of the counters (15, 16) via a second switch (S2) controlled by the comparator (3),
- a sequence controller (9) for controlling the counters (15, 16) and the shift register (17), and
- an evaluation apparatus for comparing the counter reading of the second counter (16) with a predetermined limit value condition and for generating a result signal.

**12.** Circuit arrangement according to Claim 11,
**characterized in that** the evaluation apparatus has two digital/analogue converters (13, 14) and two comparators (18, 19) for comparing the converted values with reference values.

**13.** Circuit arrangement according to either of Claims 11 and 12,
**characterized in that** the inverted counter reading of the first counter (15) can be stored in the shift register (17).

**Revendications**

**1.** Procédé pour détecter les impulsions de commutation d'un moteur de ventilateur comprenant les étapes suivantes :

- détection et mémorisation continues de valeurs d'une tension de mesure proportionnelles au courant du ventilateur à des intervalles de temps prédéfinis,
- interprétation continue des valeurs de tension de mesure en calculant le rapport entre deux valeurs mesurées voisines dans le temps et comparaison de ce rapport avec des conditions de valeur limite prédéfinies et
- délivrance d'un signal de résultat lorsque le rapport remplit les conditions de valeur limite prédéfinies.

**2.** Procédé selon la revendication 1, **caractérisé en ce que** les valeurs de tension de mesure, avant l'interprétation, sont converties en valeurs de temps qui dépendent de celles-ci.

**3.** Procédé selon la revendication 2, **caractérisé en ce que** le logarithme des valeurs de tension de mesure est calculé lors de la conversion des valeurs de tension de mesure en valeurs de temps.

**4.** Procédé selon la revendication 2 ou 3, **caractérisé par** les étapes suivantes de détermination des valeurs de temps proportionnelles aux valeurs de tension de mesure :

- génération d'une courbe de tension,
- comparaison de la courbe de tension avec une tension de mesure proportionnelle au courant du ventilateur,
- retenue d'une première durée entre le début de la courbe de tension et l'instant de concordance entre la courbe de tension et la tension de mesure.

**5.** Procédé selon la revendication 4, **caractérisé en ce que** la courbe de tension présente un tracé logarithmique.

**6.** Arrangement de circuit comprenant :

- des moyens (11) pour commander un ventilateur (10),
- des moyens pour détecter les instants de commutation du moteur de ventilateur à l'aide d'une résistance de mesure du courant (RS) branchée en série avec le ventilateur,
- des moyens pour détecter et mémoriser continuellement des valeurs de tension de mesure proportionnelles au courant du ventilateur à des intervalles de temps prédéfinis, **caractérisé par**

- des moyens d'interprétation continue des valeurs de tension de mesure en calculant le rapport entre deux valeurs mesurées voisines dans le temps et de comparaison de ce rapport avec des conditions de valeur limite prédéfinies et
- des moyens pour délivrer un signal de résultat lorsque le rapport remplit les conditions de valeur limite prédéfinies.

**7.** Arrangement de circuit selon la revendication 6, **caractérisé par**

- un condensateur (C1) en parallèle duquel est branchée une résistance de décharge (R1), lequel peut être relié à une tension de charge (VCC) par le biais d'un premier commutateur (S1), le premier commutateur (S1) pouvant être soumis à une première fréquence d'oscillateur (f2) qui correspond à un multiple de la fréquence de consigne du ventilateur (10),
- un comparateur (3) pour comparer la tension du condensateur avec une tension relevée aux bornes de la résistance de mesure du courant (RS),
- un deuxième oscillateur (2) pour générer un signal d'horloge de comptage,
- un arrangement de comptage comprenant au moins deux compteurs (5, 6, 7, 8) et une commande d'exécution (9), le deuxième oscillateur (2) pouvant être relié avec les entrées de comptage des compteurs par le biais d'un deuxième commutateur (S2) commandé par le comparateur (3)
- un compteur à chaque fois actif pouvant être défini par la commande d'exécution (9) et les contenus des au moins deux compteurs (5, 6, 7, 8) pouvant être combinés entre eux et un dispositif d'interprétation étant prévu pour la comparaison avec une condition de valeur limite prédéfinie et pour générer un signal de résultat.

**8.** Arrangement de circuit selon la revendication 7, **caractérisé en ce qu'**un amplificateur (4, R3, R4, R5, S3) ayant plusieurs plages d'amplification permutables est disposé entre une prise sur la résistance de mesure du courant et le comparateur, la permutation des plages d'amplification pouvant être commandée par un signal de la commande d'exécution (9).

**9.** Arrangement de circuit selon l'une des revendications 7 ou 8, **caractérisé en ce que** la fréquence d'oscillateur (f2) du premier oscillateur (1) est un multiple entier de la fréquence de consigne du ventilateur (f1).

**10.** Arrangement de circuit selon la revendication 9, **caractérisé en ce que** la fréquence d'oscillateur (f2) du premier oscillateur (1) est le centuple de la fréquence de consigne du ventilateur (f1).

**11.** Arrangement de circuit selon la revendication 6, **caractérisé par**

- un condensateur (C1) en parallèle duquel est branchée une résistance de décharge (R1), lequel peut être relié à une tension de charge (VCC) par le biais d'un premier commutateur (S1), le premier commutateur (S1) pouvant être soumis à une première fréquence d'oscillateur (f2) qui correspond à un multiple de la fréquence de consigne du ventilateur (10),
- un comparateur (3) pour comparer la tension du condensateur avec une tension relevée aux bornes de la résistance de mesure du courant (RS),
- un deuxième oscillateur (2) pour générer un signal d'horloge de comptage,
- un arrangement de comptage comprenant au moins deux compteurs (15, 16) et
- un registre à décalage (17) branché entre la sortie du premier compteur (15) et l'entrée du deuxième compteur (16) pour la mémorisation temporaire des états de comptage, le deuxième oscillateur (2) pouvant être relié avec les entrées de comptage des compteurs (15, 16) par le biais d'un deuxième commutateur (S2) commandé par le comparateur (3)
- une commande d'exécution (9) pour commander les compteurs (15, 16) et le registre à décalage (17) et
- un dispositif d'interprétation pour comparer l'état de comptage du deuxième compteur (16) avec une condition de valeur limite prédéfinie et pour générer un signal de résultat.

**12.** Arrangement de circuit selon la revendication 11, **caractérisé en ce que** le dispositif d'interprétation présente deux convertisseurs numérique/analogique (13, 14) et deux comparateurs (18, 19) pour comparer les valeurs converties avec des valeurs de référence.

**13.** Arrangement de circuit selon l'une des revendications 11 ou 12, **caractérisé en ce que** l'état de comptage inversé du premier compteur (15) peut être mémorisé dans le registre à décalage (17).

FIG 1

FIG 2

EP 1 509 993 B1

# FIG 3

EP 1 509 993 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10021503 A1